# EUROPEAN PATENT APPLICATION

(11) **EP 3 312 150 A1**
(43) Date of publication of application: **25.04.2018**
(21) Application number: 16195191.8
(22) Date of filing: 22.10.2016
(51) Int. Cl.: C04B 28/04, E04B 5/04

(54) **AN IMPROVED CONCRETE AND A STARTING MIXTURE FOR MANUFACTURING THE CONCRETE**

(71) Applicant: Ten Napel, Klaas, 8321 GD Urk (NL)
(72) Inventor: Ten Napel, Klaas, 8321 GD Urk (NL)
(74) Representative: Plaggenborg, Menko Bernard

(57) **Abstract**

The invention relates to concrete, comprising a hydraulic binder and an expanded granular material. The concrete is characterized in that the mixture comprises the expanded granular material as loose granules, for example expanded lactic acid based granules or eps granules, and further comprises polymeric fibers of maximally 5 cm.

In a preferred embodiment the loose granules are chosen from [a] expanded lactic acid based granules or [b] eps granules are obtained from an eps precursor material comprising graphite. It is also preferred that the hydraulic binder is cement or an analogous material, preferably Portland cement.

The invention further relates to a mixture for manufacturing a concrete according to claim 1, comprising a hydraulic binder and expanded granular material. The mixture is characterized in that the mixture comprises the expanded granular material as loose granules, for example expanded lactic acid based granules or eps granules, and further comprises polymeric fibers of maximally 5 cm.

## Description

The present invention relates to an improved concrete according to the preamble of claim 1. The invention also relates to a mixture for manufacturing a concrete according to the present invention.

It is known in the art to admix eps (expanded polystyrene) with a hydraulic binder for manufacturing a concrete so as to change its properties. For example, it is known to admix a hydraulic binder and crushed eps, consisting of several mutually connected eps granules, sometimes even dozens of such mutually connected granules. The concrete obtained has a lower weight and a somewhat improved thermal insulation. Use of such material is limited to stucco and plastering or replacement of dry walls. There is no indication in the art that other applications are envisaged or desired.

Therefore, a disadvantage of this known mixture is its limited use due to its limited compressive strength.

The invention aims at providing an improved mixture of the kind mentioned in the preamble.

The invention further aims at providing a mixture that can suitably be used for other applications in addition to the applications known in the art.

The invention especially aims at providing a concrete and a mixture for manufacturing same that has an improved strength, especially an improved compressive strength.

So as to obtain at least one of the above mentioned aims, the invention provides a concrete as mentioned in claim 1. This concrete has the advantage that it has a high compressive strength. Therefore, it has many more uses than concrete as mentioned above according to the state of the art.

It has also shown that the concrete according to the present invention has an improved thermal insulation that is even higher than known kinds of concrete that are used for construction purposes. Such synergistic effect is a surprising and advantageous effect.

According to a first embodiment, the present invention therefore relates to a concrete, comprising a hydraulic binder and an expanded granular material, characterized in that the mixture comprises the expanded granular material as loose granules, for example expanded lactic acid based granules or eps granules, and further comprises polymeric fibers of maximally 5 cm.

It is especially preferred if the fibers have a length of maximally 3 cm, preferably maximally 2 cm. It has shown that the length of the fibers, with the proviso that the length is at least 0.5 cm, is a determining factor with respect to the strength of the concrete. In addition to the advantages mentioned by the manufacturer of fibers (reduced plastic shrinkage cracking, improved impact, shatter and abrasion resistance, improved residual strength, reduced water migration and damage from freeze/thaw, improved durability, and improved green strength), it has surprisingly shown that the addition of fibers in combination with eps granules also provides improved bending strength and compression strength. Most preferably the length of the fibers is from about 1-2 cm. A very suitable material is Fibercast ® 500, a polypropylene fiber having a length of 12 mm.

An improved adhesion of the eps granules is obtained when the loose granules are chosen from [a] expanded lactic acid based granules or [b] eps granules are obtained from an eps precursor material comprising graphite. Commercially available eps granules and lactic acid based granules (known in the art as Biofoam pearls) containing graphite are available, wherein the graphite is added as a fire retardant. However, it has surprisingly shown that such graphite comprising granules yield excellent results with respect to adhesion to the hydraulic binder in the concrete.

It is especially preferred for the hydraulic binder to be cement or an analogous material, preferably Portland cement.

A strong and durable product is obtained when the ratio of ingredients is in the range of 1 kg eps granules : 15 - 32 kg hydraulic binder, based on the amount of Portland cement, with the proviso that if lactic acid based granules are used, a corresponding volume of granules is added. Where another hydraulic binder is used, an equivalent amount of that binder should be used providing the same or equivalent results as a concrete.

It is preferred for the concrete that the ratio of ingredients is in the range of 1 kg eps granules : 21 - 27 kg hydraulic binder, providing even improved results, with the proviso that if lactic acid based granules are used, a corresponding volume of granules is added.

When improved bending strength is required, for example when manufacturing floor slabs or the like, it is preferred to apply a higher amount of hydraulic binder, preferably wherein the volume ratio of hydraulic binder : eps granules is in the range between 25 - 32, with the proviso that if lactic acid based granules are used, a corresponding volume of granules is added.

A good product is obtained when the weight ratio of fibers : eps granules is in the range of 1 : 9 - 14. It is even preferred that the weight ratio of fibers : eps granules is in the range of 1 : 11 - 12, providing excellent results with regard to bending strength and compression strength. Here also, the proviso applies that if lactic acid based granules are used, a corresponding volume of granules is added.

Regarding the eps granules, it is preferred that the volume ratio of hydraulic binder : eps granules is in the range between 1 : 3 - 5, preferably the range is about 1 : 4, with the proviso that if lactic acid based granules are used, a corresponding volume of granules is added. This range provides excellent results with regard to overall weight and compression strength.

As known in the art, the concrete according to the invention comprises water for hydraulically binding the hydraulic binder. The amount of water is dependent on the amount of hydraulic binder and is prescribed by the manufacturer of the hydraulic binder used.

According to a further aspect, the invention also relates to a mixture for manufacturing a concrete according to the invention. The mixture comprises a hydraulic binder and expanded granular material, and is characterized in that the mixture also comprises the expanded granular material as loose granules, for example expanded lactic acid based granules or eps granules, and further comprises polymeric fibers of maximally 5 cm.

The preferred embodiments as mentioned above with respect to the concrete according to the present invention are applicable in the mixture as well.

More in particular a few highly preferred embodiments are described hereafter. In that respect, in a mixture according to the invention, the loose granules are chosen from [a] expanded lactic acid based granules or [b] eps granules are obtained from a precursor material comprising graphite.

Furthermore, it is preferred in the mixture that the hydraulic binder is cement or an analogous material, preferably Portland cement.

Analogously to the concrete as mentioned above, in the mixture according to the invention it is preferred that the ratio of ingredients is in the range of 1 kg eps granules : 15 - 32 kg hydraulic binder; preferably in the range of 1 kg eps granules : 21 - 27 kg hydraulic binder, with the proviso that if lactic acid based granules are used, a corresponding volume of granules is added. It has shown that the average normalized compression strength is at least 5 N/mm² when applying these ratios.

When improved bending strength is required, for example when manufacturing floor slabs or the like, it is preferred to apply a higher amount of hydraulic binder, preferably wherein the volume ratio of hydraulic binder : eps granules is in the range between 25 - 32, with the proviso that if lactic acid based granules are used, a corresponding volume of granules is added.

The weight ratio of fibers : eps granules in the present mixture is preferably in the range of 1 : 9 - 14; more preferably the weight ratio of fibers : eps granules is in the range of 1 : 11 - 12, here also with the proviso that if lactic acid based granules are used, a corresponding volume of granules is added.

The invention also relates to the use of the mixture and the concrete according to the present invention. More in particular, the use of the mixture comprises the steps of admixing the dry components in random sequence and then adding the water for providing hydraulic binding action of the binder. The thus obtained liquid mixture is poured into a mold and left to set. After a sufficient green hardness is obtained the product may be removed from the mold, or the product may be left in the mold until full strength is obtained. Additional strength of the product may be obtained by placing a reinforcement in the mold and then pouring in the mixture according to the present invention.

Use of the concrete is not particularly limited, but the concrete may be used as constructional wall, non-bearing wall, floor or ceiling slab and the like.

Because of the concrete's high thermal insulation a single wall can be used when erecting a building, such that it ca be dispensed with a cavity wall with separate inner and outer walls. Since the concrete comprises a hydraulic binder, it can be easily plastered, yielding a flat surface.

Hereafter, the invention will be further described by means of a drawing. The drawing shows in:
Fig. 1 an image of a concrete according to the present invention,
Fig. 2 a simplified embodiment of a reinforcement for use in the present invention, and
Fig. 3 a cross section of a floor element according to the present invention.

For ease of understanding the figure, not all parts that are required for a practical embodiment have been shown in the figure. Hereafter, where reference is made to an expanded granular material mostly an eps material will be mentioned. However, it is to be understood that any other suitable expanded loose granular material is meant as well. The single reference to an eps material does not limit the scope of protection sought for the present invention to eps material only.

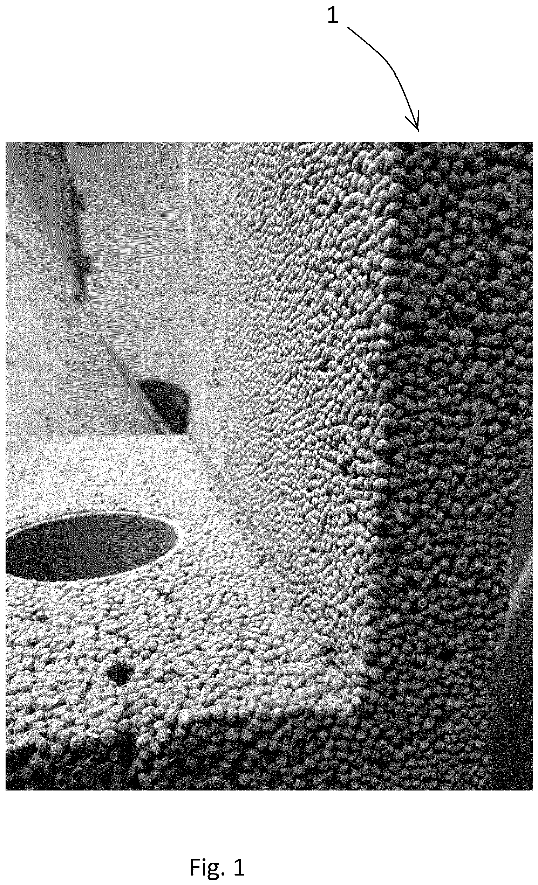

Fig. 1 shows an image of a concrete product 1, obtained from a mixture according to the present invention. Dry components, i.e. the fibers, eps granules and Portland cement are admixed so as to obtain a substantially homogeneous mixture. Then, water is added. A liquid mixture is obtained comprising a weight ratio of eps granules : Portland cement of 1 : 26, and a weight ratio of Fibercast 500 fibers : eps granules of 1 : 11.7. The amount of water was 1 liter per 3 kg Portland cement.

Finally, a plasticizer may be added to the mixture for improving the mixture's flow capacity and for densifying the concrete. Therefore, the concrete and the mixture according to the invention may comprise a plasticizer as well. The amount of plasticizer added is prescribed by the manufacturer and an effective amount of plasticizer is known in the art. As a matter of fact, the amount of water that needs to be added may be decreased when a plasticizer is added. Where a normal Portland cement requires 1 liter water per kg Portland cement, when a plasticizer is used in an amount prescribed by the manufacturer, the amount of water may surprisingly be decreased to about 1 liter water per 3 kg of Portland cement.

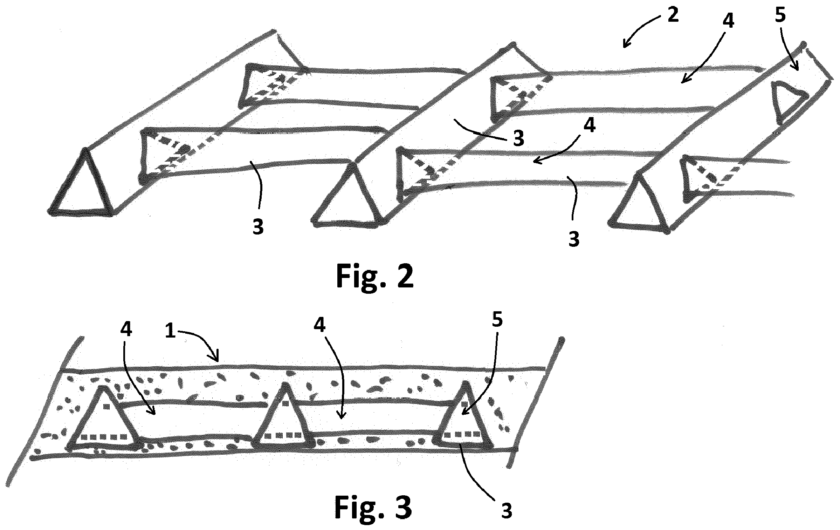

Fig. 2 shows a simplified embodiment of a reinforcement 2 for use in a concrete product 1 according to the present invention, more in particular a floor or ceiling slab. The reinforcement may be obtained from triangular bars 3, which are preferably applied such that an edge portion of the bars point upwards when the product is in use, as shown in Fig. 3. In this respect, Fig. 3 shows a cross section of a concrete product 1, more in particular a floor element, according to the present invention.

The bars may be galvanized steel triangular profiles (main beams), which are mutually connected so as to obtain a grid shaped pattern as shown in Fig. 2. Longitudinal bars 4 may be somewhat smaller than transversal bars 5 such that longitudinal bars 4 are guided through correspondingly shaped openings in the transversal bars 5. The bars 3 may be mutually connected through welding or the like which provides an excellent coupling and a very stiff and tough concrete product 1.

According to a preferred embodiment the eps foam granules may be obtained from so-called Biofoam pearls, which are.

The invention is not limited to the embodiments as mentioned above and as shown in the drawing. The invention is limited by the claims only.

The invention also relates to all combinations of features described here independently of each other.

## Claims

1. A concrete, comprising a hydraulic binder and an expanded granular material, **characterized in that** the mixture comprises the expanded granular material as loose granules, for example expanded lactic acid based granules or eps granules, and further comprises polymeric fibers of maximally 5 cm.

2. A concrete according to claim 1, wherein the fibers have a length of maximally 3 cm, preferably maximally 2 cm.

3. A concrete according to claim 1, wherein the loose granules are chosen from [a] expanded lactic acid based granules or [b] eps granules are obtained from an eps precursor material comprising graphite.

4. A concrete according to claim 1, wherein the hydraulic binder is cement or an analogous material, preferably Portland cement.

5. A concrete according to any of claims 1-4, wherein the ratio of ingredients is in the range of 1 kg eps granules : 15 - 32 kg hydraulic binder, with the proviso that if lactic acid based granules are used, a corresponding volume of granules is added.

6. A concrete according to claim 5, wherein the ratio of ingredients is in the range of 1 kg eps granules : 21 - 27 kg hydraulic binder, with the proviso that if lactic acid based granules are used, a corresponding volume of granules is added.

7. A concrete according to claim 1, wherein the weight ratio of fibers : eps granules is in the range of 1 : 9 - 14, with the proviso that if lactic acid based granules are used, a corresponding volume of granules is added.

8. A concrete according to claim 7, wherein the weight ratio of fibers : eps granules is in the range of 1 : 11 - 12, with the proviso that if lactic acid based granules are used, a corresponding volume of granules is added.

9. A concrete according to any of claims 4 to 6, wherein the volume ratio of hydraulic binder : eps granules is in the range between 1 : 3 - 5, preferably is about 1 : 4, with the proviso that if lactic acid based granules are used, a corresponding volume of granules is added.

10. A concrete according to claim 1, comprising water for hydraulically binding the hydraulic binder.

11. A mixture for manufacturing a concrete according to claim 1, comprising a hydraulic binder and expanded granular material, **characterized in that** the mixture comprises the expanded granular material as loose granules, for example expanded lactic acid based granules or eps granules, and further comprises polymeric fibers of maximally 5 cm.

12. A mixture according to claim 11, wherein the loose granules are chosen from [a] expanded lactic acid based granules or [b] eps granules are obtained from an eps precursor material comprising graphite.

13. A mixture according to any of the preceding claims, wherein the hydraulic binder is cement or an analogous material, preferably Portland cement.

14. A mixture according to any of the preceding claims, wherein the ratio of ingredients is in the range of 1 kg eps granules : 15 - 32 kg hydraulic binder; preferably in the range of 1 kg eps granules : 21 - 27 kg hydraulic binder, with the proviso that if lactic acid based granules are used, a corresponding volume of granules is added.

15. A mixture according to any of the preceding claims, wherein the weight ratio of fibers : eps granules is in the range of 1 : 9 - 14; preferably wherein the weight ratio of fibers : eps granules is in the range of 1 : 11 - 12, with the proviso that if lactic acid based granules are used, a corresponding volume of granules is added.
